# EUROPÄISCHE PATENTSCHRIFT

(11) **EP 4 279 299 B1**
(45) Veröffentlichungstag und Bekanntmachung des Hinweises auf die Patenterteilung: **31.12.2025**
(21) Anmeldenummer: 22174319.8
(22) Anmeldetag: 19.05.2022
(51) Int. Cl.: B60H 1/00, B60P 3/36, B60R 25/31, B60P 3/34, B60S 9/12, B60Q 3/40, B60Q 3/74, B60Q 3/80, B60R 16/037

(54) **FAHRZEUG IN ART EINES REISEMOBILS ODER EINES CARAVANS**
VEHICLE IN THE FORM OF A MOBILE HOME OR A CARAVAN
VÉHICULE DU TYPE D'UN CAMPING-CAR OU D'UNE CARAVANE

(43) Veröffentlichungstag der Anmeldung: 22.11.2023
(73) Patentinhaber: Helmling Holding B.V., 2153 GE Nieuw-Vennep (NL); P.H.M. Blom Holding B.V., 2153 GE Nieuw-Vennep (NL)
(72) Erfinder: Helmling, Markus, 89160 Dornstadt (DE)
(74) Vertreter: Witte, Weller und Partner Patentanwälte mbB Stuttgart

(56) Entgegenhaltungen:
- DE-A1- 102021 103 399
- DE-U1- 202018 006 636
- KR-A- 20200 144 336

## Beschreibung

Die Erfindung betrifft ein Fahrzeug in Art eines Reisemobils oder eines Caravans.

Derartige Fahrzeuge sind aus dem Stand der Technik bekannt. Sie werden insbesondere für Urlaubszwecke genutzt und verfügen über einen Wohninnenraum, der üblicherweise Schlafgelegenheiten und Sitzgelegenheiten sowie eine Kochstelle zur Verfügung stellt.

Sie können heutzutage über eine Vielzahl von elektrischen oder hydraulischen Komponenten verfügen, die manuell gesteuert werden können. Hierzu zählen beispielsweise hydraulische Stützensysteme, Slide-Out-Kästen, Beleuchtungssysteme und Klimaanlagen.

Aus Dokument DE 10 2021 103 399 A1 ist ein Camping-Fahrzeug bekannt, welches über eine Klimasteuerung verfügt, die auf Basis von Sensoren arbeitet, die Personen im Fahrzeug ermittelt.

Aus Dokumente DE 20 2018 006 636 U1 ist ein System zur Erfassung von Gewichtsmerkmalen eines Fahrzeugs bekannt.

### AUFGABE UND LÖSUNG

Aufgabe der Erfindung ist es, ein Fahrzeug und ein Verfahren zu dessen Verwendung bereitzustellen, welches in Hinblick auf die Steuerung der Komponenten eine komfortable und funktional vorteilhafte Handhabung ermöglichen.

Zur Lösung dieser Aufgabe werden eine Personenerfassungseinrichtung sowie ein Fahrzeug in Art eines Reisemobils oder eines Caravans mit einem Wohninnenraum vorgeschlagen, welches über eine solche Personenerfassungseinrichtung verfügt.

Der Wohninnenraum des gattungsgemäßen Fahrzeugs ist zur Bewohnung durch Personen ausgerüstet und verfügt üblicherweise über Betten, Sitzmöglichkeiten und eine Kochstelle. Weiterhin finden sich je nach Ausstattung des Fahrzeugs auch verschiedene Staufächer und sanitäre Einrichtungen im Wohninnenraum.

Die erfindungsgemäß vorgesehene Personenerfassungseinrichtung umfasst eine Auswerteeinheit, üblicherweise in Form eines Zentralcomputers. Vorzugsweise ist diese Auswerteeinheit mit einem im Innenraum des Fahrzeugs vorgesehenen Bildschirm sowie Bedienelementen und/oder mit einer Interaktionsmöglichkeit über ein Mobilgerät wie einem Smartphone ausgerüstet, um die Funktion der Auswerteeinheit überwachen und beeinflussen zu können. Die Auswerteeinheit kann, neben der im Weiteren schwerpunktartig beschriebenen Auswerte- und Steuerfunktionalität, weitere Funktionen übernehmen, insbesondere die Steuerung eines Hydrauliksystems des Fahrzeugs.

Die Auswerteeinheit ist erfindungsgemäß mit nicht-optischen Sensoren verbunden, die mittelbar oder unmittelbar Kräfte oder Drücke erfassen. Die Sensoren sind derart angeordnet und ausgebildet, dass charakteristische Sensordaten betreffend die Anwesenheit von Personen im Fahrzeug erfasst werden, insbesondere charakteristische Sensordaten in Abhängigkeit davon, wo im Wohninnenraum Personen anwesend sind.

Die Auswerteeinheit erfasst diese Sensordaten und schließt aus diesen Sensordaten auf die anwesenden Personen sowie deren Position im Fahrzeug. Die so gebildeten Erkenntnisse über Personen und deren konkreter Ort im Wohninnenraum werden von der Auswerteeinheit genutzt, um Funktionen von Komponenten des Fahrzeugs zu steuern bzw. die Nutzung von Komponenten gezielt einzuschränken oder zu ermöglichen.

Erfindungsgemäß werden für die Personenerfassung Sensoren genutzt, die zur Erfassung der auf mindestens eine ausfahrbare Stütze wirkenden Kraft ausgebildet sind.

Insbesondere zwei Arten von Sensoren werden im Kontext einer erfindungsgemäßen Personenerfassungseinrichtung für besonders vorteilhaft erachtet.

Es kann insbesondere ein Sensor Verwendung finden, der als Drucksensor ausgebildet ist und der zur Erfassung des Drucks von Hydraulikflüssigkeit eines Hydrauliksystems des Fahrzeugs ausgebildet ist. Ein solcher Drucksensor kann dabei insbesondere Verwendung finden, wenn das Hydrauliksystem des Fahrzeugs über eine Mehrzahl von hydraulisch ausfahrbaren Stützen verfügt. Der Druck der Hydraulikflüssigkeit in solchen Stützen wird durch die auf sie wirkende Last beeinflusst und somit auch durch den Lastanteil, der durch Personen im Fahrzeug bedingt ist.

Insgesamt weist ein erfindungsgemäßes Fahrzeug mindestens drei und vorzugsweise maximal sechs solche Stützen auf. Besonders vorteilhaft ist eine Gestaltung mit vier solchen hydraulisch ausfahrbaren Stützen, von denen jeweils zwei frontseitig und jeweils zwei heckseitig am Fahrzeug vorgesehen sind.

Insbesondere vorzugsweise verfügen die ausfahrbaren Stützen über mindestens drei gegeneinander verschiebliche Teleskopelemente. Bei solchen Stützen werden mindestens zwei Teleskopelemente durch den hydraulischen Flüssigkeitsdruck ausgefahren, wobei jeweils unterschiedliche wirksame Druckbeaufschlagungsflächen an den Teleskopelementen vorgesehen sind, auf die der Hydraulikdruck wirkt. Die beim zweiten Teleskopelement verringerte wirksame Fläche führt dazu, dass die Gewichtskraft von Personen im Wohninnenraum zu vergleichsweise großen Druckänderungen in der Hydraulikflüssigkeit führen. Hierdurch wird die Erfassbarkeit durch die Drucksensoren vereinfacht.

Der genannte mindestens eine hydraulische Drucksensor ist in der Lage, den Druck der Hydraulikflüssigkeit an der mindestens einen Stütze zu erfassen. Vorzugsweise ist je hydraulischer Stütze ein eigener Drucksensor vorhanden. Der mindestens eine Drucksensor erfasst die auf der jeweiligen Stütze aufliegende Last, die primär durch das Fahrzeug selbst bedingt ist. Zusätzlich ändert sich der anliegende Druck in Abhängigkeit der Fahrzeugbeladung und insbesondere in Abhängigkeit der Personen im Fahrzeug. Die Änderungen des Drucks gestatten somit Rückschlüsse auf die Anwesenheit von Personen. Durch den Vergleich der Druckänderungen an verschiedenen hydraulischen Stützen können Personen lokalisiert werden. Steigt beispielsweise der Druck primär an den heckseitigen Stützen, so kann hieraus auf die Anwesenheit von Personen im Heckbereich geschlossen werden. Sinkt der Druck an den heckseitigen hydraulischen Stützen und steigt er korrespondierend an den frontseitigen hydraulischen Stützen, so lässt sich hieraus schließen, dass eine oder mehrere Personen sich im Fahrzeug in Richtung des vorderen Fahrzeugteils bewegen.

Die Erfassung des Drucks kann unmittelbar an den Hydraulikzylindern der Stützen selbst erfolgen. Bevorzugt ist es allerdings, wenn statt einer solchen dezentralen Druckmessung die Sensoren im Bereich einer zentralen Hydraulikeinheit vorgesehen sind, die in Form eines Zentralmoduls ausgebildet ist und neben einer Hydraulikpumpe und Steuerventilen auch den mindestens einen und die vorzugsweise mindestens drei Drucksensoren umfasst. Der hier zu messende Druck ist zwar nicht zwingend identisch mit dem an den Hydraulikzylindern der Stützen unmittelbar herrschenden Druck. Er steht hierzu jedoch in einem definierten Verhältnis, so dass die gewünschten Rückschlüsse zur Anwesenheit von Personen auch so möglich sind.

Die genannten Drucksensoren dienen der Erfassung der auf die Stützen wirkenden Kraft. Neben Hydraulikdrucksensoren können jedoch auch andere Sensoren zu diesem Zweck verwendet werden, beispielsweise unmittelbar an den Stützen vorgesehene Kraftsensoren oder Dehnungssensoren, die ebenfalls in Abhängigkeit der auf die Stützen wirkenden Kräfte Sensordaten liefern. Derartige Sensoren können auch bei nichthydraulischen Stützensystemen verwendet werden, beispielsweise bei elektrisch betriebenen.

Es ist nicht zwingend erforderlich, dass die auf alle Stützen wirkenden Kräfte bzw. Drücke erfasst werden. Insbesondere wenn die im Weiteren noch erläuterten Fußboden-Sensoren Verwendung finden, kann auf Sensorik zur Erfassung der Stützenkräfte verzichtet werden.

Sofern jedoch das Fahrzeug über ausfahrbare Stützen verfügt, wird es als vorteilhaft angesehen, wenn zumindest eine Stütze, die im Bereich einer Durchgangsöffnung mit Eingangstür vorgesehen ist, mittels eines Sensors der beschriebenen Art in Hinblick auf die hierauf lastende Kraft ausgewertet werden. Der Sensor an dieser Stütze im Bereich der Durchgangsöffnung bietet besondere Vorteile bei der Ermittlung, ob eine Person das Fahrzeug verlässt oder in das Fahrzeug eintritt. Wie im Weiteren noch beschrieben ist, sind verschiedene Funktionen, die von der Auswerteeinheit gesteuert werden, zweckmäßigerweise daran gekoppelt, ob Personen das Fahrzeug verlassen oder eintreten.

Damit der der entsprechenden Stütze zugeordnete Sensor ausreichend nutzbare Sensordaten liefert, ist es von Vorteil, wenn die entsprechende Stütze bezogen auf eine Horizontalebene nicht mehr als 1 m von der Durchgangsöffnung entfernt ist, insbesondere vorzugsweise nicht weiter als 60 cm.

Der zweite Sensortyp, der im Kontext einer erfindungsgemäßen Personenerfassungseinrichtung als besonders vorteilhaft angesehen wird, ist ein Sensortyp zur Erfassung der unmittelbar auf den Fahrzeugboden wirkenden Kräfte. Vorzugsweise ist eine Mehrzahl solcher Sensoren vorgesehen, insbesondere vorzugsweise zwischen drei und zehn. Die entsprechenden Sensoren sind im Bereich des Fußbodens angebracht. Insbesondere können sie an der Unterseite eines Fußbodens vorgesehen sein bzw. im Falle eines mehrlagigen Fußbodens an der Unterseite einer oberen Lage des Fußbodens oder innerhalb einer Bodenplatte des Fußbodens.

Eine besonders vorteilhafte Wahl des Messprinzips ist in diesem Falle die Nutzung von Dehnungssensoren, insbesondere von Dehnungsmessstreifen. Diese Dehnungssensoren können an der Unterseite des Fußbodens oder von dessen oberer Lage angebracht sein, beispielsweise durch Verkleben. Wenn Personen oder anderweitige dynamische Lasten von oben auf den Fußboden wirken, kommt es zu Durchbiegungen, die zu gut erfassbaren Dehnungen an der Unterseite des Fußbodens oder von deren oberer Lage führen.

Alternativ können auch Drucksensoren im Bereich des Fußbodens vorgesehen sein, beispielsweise kapazitive Drucksensoren, die auf dem Fußboden oder im Fußboden eingebaut sind.

Vorzugsweise weist der Fußboden im Bereich des Wohninnenraums eine Sandwich-Struktur mit zwei flächigen horizontalen Lagen auf. Der Zwischenbereich kann neben anderweitigen Versorgungs- und Datenleitungen auch die Sensoren zur Erfassung der Bodenbelastung aufnehmen.

Eine erfindungsgemäße Personenerfassungseinrichtung ist vorzugsweise nachrüstbar in Bestandsfahrzeuge. Insbesondere deshalb ist es von Vorteil, wenn die einfach anzubringenden Druck-, Kraft- oder Dehnungssensoren Verwendung finden, die auf einfache Weise an der Fußbodenunterseite angebracht werden, um dann über eine Kabel- oder Funkverbindung mit der Auswerteeinheit gekoppelt zu werden.

Neben einer solchen leicht nachrüstbaren Lösung kann es jedoch auch von Vorteil sein, die Personenerfassungseinrichtung als integralen Bestandteil von Anfang an in einem Fahrzeug der beschriebenen Art vorzusehen. In einem solchen Falle wird es als wünschenswert angesehen, dass der mindestens eine Sensor innerhalb einer Bodenplatte des Fußbodens angeordnet ist, beispielsweise, indem er bei der Herstellung der Platte aus Grundmaterial bereits im Kern der Bodenplatte platziert wird oder indem Vertiefungen in die Bodenplatte eingebracht werden, beispielsweise eingefräst werden, in die der Sensor eingesetzt wird.

Wie bereits beschrieben, ist vorzugsweise eine Mehrzahl von fußbodenseitigen Sensoren vorgesehen. Die Sensoren sind dabei vorzugsweise nur im begehbaren Bereich vorgesehen. Der Abstand benachbarter Sensoren beträgt vorzugweise im Mittel zwischen 20 cm und 100 cm, insbesondere vorzugsweise zwischen 30 cm und 80 cm. Sind größere Freiflächen im Wohninnenraum vorhanden, so sind die Sensoren vorzugsweise rasterartig angeordnet. Handelt es sich um einen Wohninnenraum, der schmale Freiflächen bietet, so sind die Sensoren hier vorzugsweise entlang einer Reihe mit den oben genannten Abständen angeordnet.

Die Auswerteeinheit erkennt anhand der Sensoren, wo eine vergrößerte Gewichtskraft auf den Fußboden wirkt. Die Lokalisierung von Personen ist dabei üblicherweise genauer als bei dem beschriebenen System mit der Auswertung der an den Stützen anliegenden Kräften oder Drücken. Insbesondere können aber auch beide Sensorarten kombiniert sein, um gemeinsam eine besonders gute Erfassbarkeit von Personen zu ermöglichen und Störfaktoren auszuschließen.

Wie eingangs schon beschrieben, wertet die Auswerteeinheit die Sensordaten der beschriebenen Sensoren aus, um hieraus verschiedene Informationen erzeugen zu können, ob sich eine Person im Wohninnenraum des Fahrzeugs befindet und/oder wo im Wohninnenraum sich eine Person befindet. Diese Informationen führen zu Reaktionen an Komponenten des Fahrzeugs oder werden genutzt, um die Verwendung verschiedener Komponenten des Fahrzeugs anschließend zu beeinflussen, zu beschränken oder zu ermöglichen. Das Verfahren der Auswertung zur Erzeugung dieser Informationen und der nachfolgenden Verwendung der Informationen stellt ebenfalls einen Aspekt der hier beschriebenen Erfindung dar.

Die von der Auswerteeinheit in Abhängigkeit der Sensordaten ermittelten Informationen können primär die Information umfassen, ob sich derzeit eine Person im Wohninnenraum befindet. Diese Information ist vergleichsweise einfach zu ermitteln, indem Veränderungen in den Sensordaten erfasst werden. Eine dauerhafte und unveränderte Last, die durch fußbodenseitige oder stützenseitige Sensoren erfasst wird, wird von der Auswerteeinheit nicht als Person interpretiert, sondern ist vermutlich durch das Fahrzeug und seine Beladung bedingt. Die Erfassung einer solchen Beladung kann mittels eines Kalibriervorgangs erfolgen, nachdem das Fahrzeug abgestellt worden ist und möglicherweise nach Aufforderung an die Personen, das Fahrzeug kurz zum Zwecke der Kalibrierung zu verlassen. Es können dann Sensordaten der Sensoren erfasst werden, die sich bei Abwesenheit von Personen einstellen. Diese Daten können bei der weiteren Auswertung als Referenzdaten herangezogen werden.

Personenbedingte Sensordaten zeichnen sich dadurch aus, dass sie Veränderungen unterliegen, wenn die Person in das Fahrzeug eintritt oder das Fahrzeug verlässt oder sich innerhalb des Fahrzeugs bewegt. Durch die vergleichsweise dynamische Veränderung der Last auf die fußbodenseitigen Sensoren oder die Sensoren an den Stützen wird erkannt, dass mindestens eine Person oder mehrere Personen im Wohninnenraum sind. Die Sensoren gestatten eine Ermittlung des Aufenthaltsortes der Person, wobei insbesondere die fußbodenseitigen Sensoren recht unmittelbare und genaue Rückschlüsse auf den Ort zulassen.

Zu den Komponenten, die in Abhängigkeit der Auswertung gesteuert werden, können insbesondere Leuchtmittel im Wohninnenraum gehören, die üblicherweise mittels Schaltern aktivierbar und deaktivierbar sind. Stattdessen oder zusätzlich kann ein solches Leuchtmitteljedoch auch von der Auswerteeinheit gesteuert werden. So kann das Leuchtmittel beispielsweise aktiviert werden, wenn eine Person oder eine Ortsänderung der Person erfasst wird. Die Aktivierung kann dabei auch uhrzeitabhängig und/oder in Abhängigkeit von externen Lichtverhältnissen erfolgen, so dass nur bei Nacht bzw. bei Dunkelheit ein Leuchtmittel bei erfasster Bewegung aktiviert wird bzw. das Leuchtmittel bei Nacht nur mit geringer Leuchtkraft aktiviert wird, um als Nachtlicht zur Orientierung zu agieren. Ebenfalls ist es möglich, die Auswerteeinheit so zu konfigurieren, dass bei Abwesenheit von Personen und/oder bei längerfristiger Ortsfestigkeit einer Person das Leuchtmittel deaktiviert wird, wobei zusätzlich in die Auswertung einbezogen werden kann, ob das Fahrzeug verschlossen ist.

Eine weitere Komponente, die in einem erfindungsgemäßen Fahrzeug vorzugsweise vorgesehen und mit der Auswerteeinheit gekoppelt ist, ist eine Heiz- und/oder Klimaanlage. Auch diese kann als Ganzes aktiviert, deaktiviert oder bezüglich ihrer Leistung reguliert werden, wenn keine Personen mehr im Wohninnenraum zugegen sind, wenn Personen eintreten oder eine Situation von längerer Ortsfestigkeit der Personen erkannt wird. Insbesondere kann die Heiz- und/oder Klimaanlage dafür ausgebildet sein, verschiedene Zonen des Fahrzeugs in unterschiedlichem Maße selektiv klimatisieren zu können und dies von der Position der Personen im Fahrzeug abhängig zu machen. So bietet es sich insbesondere an, des Nachts eine Schlafzone des Fahrzeugs stärker zu klimatisieren, während die Heiz- und/oder Klimaanlage in mindestens einer anderen Zone keine oder eine schwächere Klimatisierung vornimmt.

Es ist bereits erläutert worden, dass das Fahrzeug vorzugsweise ausfahrbare Stützen aufweist. Diese können über den dort anliegenden Hydraulikdruck Sensoren der Personenerfassungseinrichtung zur Verfügung stellen. Unabhängig von einer solchen Sensorik können die Stützen jedoch auch Komponenten des Fahrzeugs darstellen, die in Reaktion auf die Anwesenheit oder Abwesenheit von Personen auf bestimmte Art betrieben werden oder eine Handhabung gezielt unterbinden. So ist es beispielsweise von Vorteil, wenn die Auswerteeinheit dafür ausgebildet ist, die Stützen etwas weiter auszufahren, wenn Personen in das Fahrzeug einsteigen, um eine erhöhte Standstabilität zu bieten. Ist hingegen keine Person anwesend, so kann es zweckmäßig sein, die Stützen etwas abzusenken, um im Falle äußerer Einflüsse wie starkem Wind die Windangriffsfläche des Fahrzeugs zu verringern.

Eine andere Möglichkeit der Beeinflussung des Stützensystems durch die Auswerteeinheit kann darin bestehen, das durch manuelle Aktivierung initiierte Einfahren der Stützen nur dann zuzulassen, wenn keine Person mehr im Wohninnenraum zugegen ist. Wird also manuell über Betätigungselemente, beispielsweise am Smartphone, das Einfahren der Stützen ausgelöst, so führt das bei Anwesenheit von Personen im Wohninnenraum zu einer gegebenenfalls ignorierbaren Warnung oder aber zu einem vollständigen Unterbinden des Einfahrens. Auch das Ausfahren der Stützen kann entsprechend limitiert sein.

Vorzugsweise weist ein erfindungsgemäßes Fahrzeug einen hydraulisch ausfahrbaren Slide-Out-Kasten auf. Ein solcher Slide-Out-Kasten weist üblicherweise eine Stirnwand und vier Seitenwände auf. Die Stirnwand bildet einen verlagerbaren Wandabschnitt einer den Innenraum begrenzenden Außenwand des Fahrzeugs und insbesondere einer einen Wohn- oder Schlafraum begrenzenden Außenwand. Dieser Ausfahrkasten ist in einer Aussparung eines ortsfesten Wandabschnitts der genannten Außenwand vorgesehen. Der Slide-Out-Kasten ist mittels eines vorzugsweise hydraulischen Ausfahrsystems in einer Ausfahrrichtung zwischen einer Staustellung und einer Nutzstellung verlagerbar. In der Staustellung bildet die genannte Stirnwand einen bündigen Teilabschnitt der Außenwand. In der Nutzstellung ist die Stirnwand in einer Ausfahrrichtung ausgefahren, so dass der Innenraum hierdurch vergrößert ist. Die Seitenwände, die zuvor im Innenraum angeordnet waren, sind in der Nutzstellung zumindest abschnittsweise Teil der Außenwand.

Das Aus- und Einfahren eines solchen Slide-Out-Kastens ist im Falle eines erfindungsgemäßen Fahrzeugs vorzugsweise mit der Auswerteeinheit und der von dieser ermittelten Informationen zu anwesenden Personen gekoppelt. Insbesondere kann vorgesehen sein, dass das Ausfahren und das Einfahren oder alternativ nur das Ausfahren nur dann möglich ist, wenn die Auswerteeinheit anhand der Sensordaten ermittelt, dass keine Person im Wohninnenraum zugegen ist. Sofern die Personenerfassungseinrichtung bodenseitige Sensoren aufweist, kann zudem das Einfahren davon abhängig gemacht werden, dass keinerlei nicht fahrzeugfeste Lasten in jenem Bereich des Innenraums auf dem Boden detektiert werden, mit denen der Slide-Out-Kasten beim Einfahren kollidieren könnte. Neben einer Unterbindung des Ausfahrens oder Einfahrens des Slide-Out-Kastens kann die Auswerteeinheit auch dafür ausgebildet sein, eine bereits begonnene Bewegung des Slide-Out-Kastens zu unterbrechen, wenn die Sensoren erkennen lassen, dass eine Person in einen kollisionsgefährdeten Bereich eingetreten ist.

Eine weitere Komponente des Fahrzeugs, die über die Auswerteeinheit der Personenerkennungseinrichtung gesteuert werden kann, ist eine Alarmanlage. Eine solche Alarmanlage kann weitere Sensoren umfassen, insbesondere optische und akustische Sensoren zur Überwachung des Innenraums. Die Auswerteinheit kann derart konfiguriert sein, dass die Alarmanlage oder die gegebenenfalls in die Auswerteeinheit integrierte Alarmfunktion aktiviert wird, wenn alle Personen den Fahrzeuginnenraum verlassen haben und das Fahrzeug verschlossen wurde. Die Alarmfunktion kann neben den genannten spezifisch hierfür vorgesehenen Sensoren dafür ausgebildet sein, zusätzlich die genannten Sensoren der Personenerfassungseinrichtung zu nutzen, um eine Alarmsituation sicher zu identifizieren.

Neben den genannten Komponenten, die durch die Auswertung der Auswerteeinheit beeinflusst werden, können auch weitere Komponenten oder elektrische Verbraucher des Fahrzeugs in Reaktion auf die Auswertung gesteuert werden. Beispielsweise können elektrische Verbraucher bei Abwesenheit von Personen deaktiviert werden und/oder ein Gasventil geschlossen werden und/oder Beschattungssysteme wie Markisen und Rollos ausgefahren oder eingefahren werden.

Die genannten Sensoren der Personenerfassungseinrichtung können kabelgebunden oder per Funk mit der zentralen Auswerteeinheit gekoppelt sein. Möglich ist es auch, die Sensoren und/oder die oben genannten Komponenten mit der Auswerteeinheit über einen CAN-Bus zu verbinden. Auch ist es möglich, die Auswerteeinheit über separate Leitungen oder Funk mit den Sensoren zu verbinden, wobei die Auswerteeinheit jedoch an den zentralen CAN-Bus des Fahrzeugs angeschlossen ist. Hierdurch ist es möglich, dass die Auswerteeinheit mit weiteren fahrzeugseitigen Komponenten wie beispielsweise einer Schließanlage kommuniziert, um dieses in die Steuerung der weiteren Komponenten einzubeziehen. Für die Sensoren wird auch eine Anbindung über eine Netzwerkschnittstelle für eine vorteilhafte Möglichkeit gehalten, insbesondere über PoE-Netzwerkverbindungen (Power-o-ver-Ethernet).

Die Sensoren zur Personenerfassung können durchgehend aktiviert sein und die Sensordaten durchgehend von der Auswerteeinheit eingelesen werden. Je nach Art der Sensoren und nach Art der Auswertung kann dies jedoch zu hohem Stromverbrauch führen. Es ist daher zweckmäßig, wenn das Fahrzeug über mindestens einen Beschleunigungssensor verfügt, dessen Sensordaten genutzt werden, um in Reaktion auf eine oder wiederholte erfasste Erschütterungen die genannten weiteren Sensoren und/oder deren Auswertung zu aktivieren. Insbesondere kommt ein solches Vorgehen dann in Frage, wenn hydraulische Drucksensoren des Stützensystems zur Personenerfassung genutzt werden. Neben der vollständigen Aktivierung und Deaktivierung von Sensoren in Abhängigkeit davon, ob Erschütterungen sensiert wurden, kann auch die Abfragefrequenz von Sensoren in Abhängigkeit von erfassten Erschütterungen gesteuert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 bis 3 zeigen ein Reisefahrzeug in verschiedenen Ansichten.
Fig. 4 zeigt eine Vergrößerung eines Bodenbereichs des Fahrzeugs unterhalb eines Wohnraums.
Fig. 5 zeigt ein Personenerfassungssystem sowie ein Hydrauliksystems des Fahrzeugs.

### DETAILLIERTE BESCHREIBUNG DER AUSFÜHRUNGSBEISPIELE

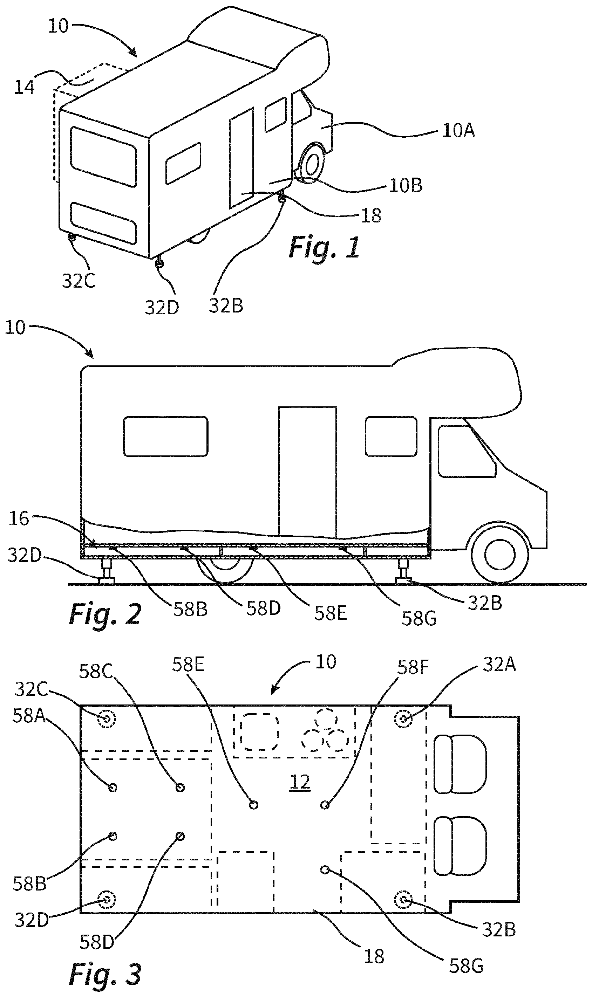

Fig. 1 bis 3 zeigen ein erfindungsgemäßes Fahrzeug 10, welches in Art eines Wohnmobils ausgestaltet ist, alternativ aber auch als Caravan-Anhänger gestaltet sein könnte. Das Fahrzeug 10 weist eine Fahrerkabine 10A sowie einen Aufbau 10B auf, wobei der Aufbau 10B einen Wohninnenraum 12 beinhaltet.

Fig. 3 zeigt diesen Wohninnenraum mit Schlaf- und Sitzgelegenheiten sowie einer Kochstelle von oben. Der Wohninnenraum 12 ist durch eine seitlich am Fahrzeug 10 vorgesehene Durchgangsöffnung 18 und eine hier vorgesehene Tür zugänglich.

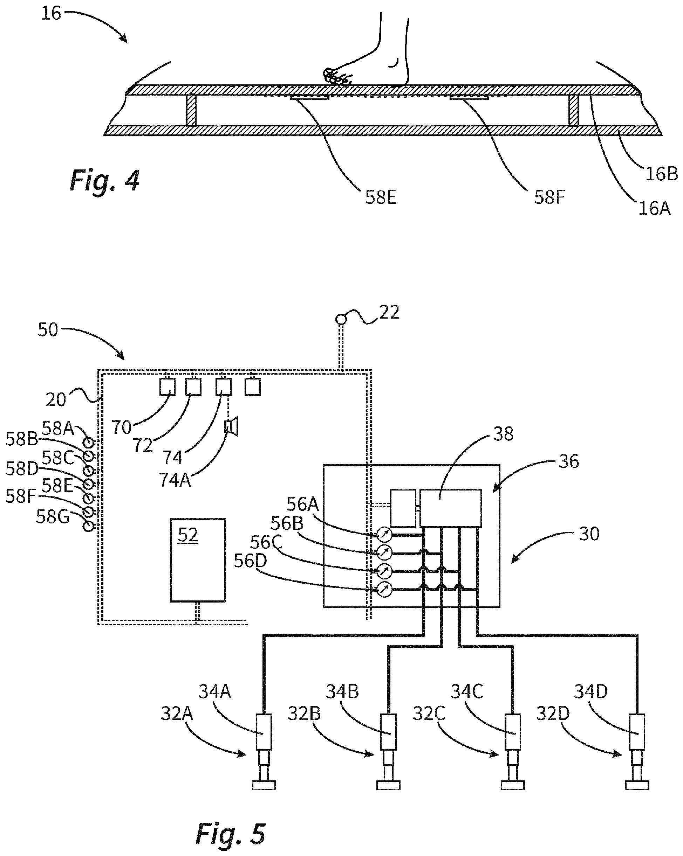

Das Fahrzeug weist ein Stützensystem mit Stützen 32A-32D auf, die hydraulisch ausfahrbar sind, um das Fahrzeug im stehenden Zustand zu stabilisieren. Zum Aus- und Einfahren der Stützen 32A-32D ist eine zentrale Hydraulikeinheit 36 mit einer Hydraulikpumpe 38 vorgesehen, die in Fig. 5 dargestellt ist. Durch Zuführung von Hydraulikflüssigkeit lassen sich die Hydraulikzylinder 34A-34D der Stützen 32A-32D ausfahren und einfahren.

Das Fahrzeug 10 verfügt über eine Personenerfassungseinrichtung 50, die anhand der Fig. 5 verdeutlicht wird. Die Personenerfassungseinrichtung 50 umfasst als Hauptkomponente eine Auswerteeinheit 52, die durch eine Rechnereinheit mit Ein- und Ausgängen gebildet wird. Die Auswerteeinheit52 muss keine separate Einheit bilden, sondern kann mit einem Steuersystem des Fahrzeugs 10 identisch sein, welches beispielsweise für die Ansteuerung der Hydraulikpumpe 38 vorgesehen ist.

Die Auswerteeinheit 52 ist im Kontext der Personenerfassungseinrichtung 50 dafür vorgesehen, Sensordaten unterschiedlicher Sensoren zu erfassen, um anhand derer zu erkennen, ob Personen im Wohninnenraum 12 zugegen sind und wo sich diese Personen im Wohninnenraum befinden. Die Auswerteeinheit 52 ist hierfür insbesondere mit zwei Arten von Sensoren verbunden.

Die erste Art von Sensoren der Personenerfassungseinrichtung 50 wird durch Hydraulikdrucksensoren 56A-56D gebildet. Diese Hydraulikdrucksensoren 56A-56D sind Teil der zentralen Hydraulikeinheit 36, könnten jedoch auch dezentral an den Stützen 32A-32D vorgesehen sein. Die Hydraulikdrucksensoren 56A-56D erfassen den an den Hydraulikzylindern 34A-34D anliegenden Druck, der wiederum durch das Fahrzeuggewicht sowie zusätzliche Lasten im Fahrzeug bedingt ist. Befinden sich Personen im Wohninnenraum 12, so hat dies Auswirkungen auf den Hydraulikdruck. In Abhängigkeit davon, wo sich die Person oder die Personen befinden, steigt der Druck an den Hydraulikdrucksensoren 56A-56D in unterschiedlichem Maße an. Insbesondere von Relevanz ist dabei der Hydraulikzylinder 34B und der darin herrschende Hydraulikdruck, da hier eine schlagartige Änderung erfassbar ist, wenn eine Person durch die Durchgangsöffnung 18 in das Fahrzeug 10 einsteigt oder aus diesem aussteigt.

Die zweite Art von Sensoren der Personenerfassu ngseinrichtung 50 wird durch fußbodenseitige Sensoren 58A-58G gebildet. Wie anhand der Fig. 2 und 3 sowie in vergrößerter Form aus Fig. 4 ersichtlich ist, sind diese Sensoren 58A-58G im Bereich eines Sandwich-Bodens 16 des Fahrzeugs 10 angeordnet und zwar an der Unterseite einer oberen Lage 16A dieses Bodens 16. Sie sind dort an der Unterseite befestigt, beispielsweise mittels einer Klebeverbindung.

Bei den Sensoren 58A-58G handelt es sich um Sensoren, die dafür ausgebildet sind, auf die obere Lage 16A wirkende Kräfte oder Drücke zu erfassen. Insbesondere kann es sich um Dehnungsmessstreifen handeln. Wenn, wie in Fig. 4 dargestellt ist, eine Last auf die Lage 16A wirkt, führt dies zu einer lokalen Durchbiegung, die in Fig. 4 durch gestrichelte Linien angedeutet ist. Diese Durchbiegung geht mit einer Dehnung der Unterseite der Lage 16A einher, die eine Widerstandsänderung an den als Dehnungsmesstreifen ausgebildeten Sensoren 58A-58G bewirkt.

Durch die Auswertung der gemessenen Durchbiegung, insbesondere im Vergleich zur Durchbiegung an benachbarten Sensoren, lässt sich recht präzise erkennen, wo die Last auf den Boden 16 wirkt. Auch lässt sich durch zeitliche Verfolgung der Lasten erkennen, ob es sich bei der Last um eine Person oder einen Gegenstand handelt. Personen führen aufgrund ihrer Bewegung selbst dann zu einer Änderung der Belastung, wenn sie grundsätzlich an einem Ort verharren. Weiterhin lässt sich durch zeitliche Verfolgung der Lasten auch erkennen, ob es sich um mehrere Personen handelt und wie sich diese im Fahrzeug 10 bewegen.

Wie aus Fig. 5 erkennbar ist, sind die Sensoren 56A-56D, 58A-58G über einen CAN-Bus 20 mit der Auswerteeinheit 52 verbunden. Auf diesem Weg werden Sensordaten der jeweiligen Sensoren an die Auswerteeinheit 52 übermittelt.

Zusätzlich zu den genannten Sensoren weist das Fahrzeug noch mindestens einen Beschleunigungssensor 22 auf, der in der Lage ist, Erschütterungen zu erfassen. Dieser Beschleunigungssensor 22 dient als solcher noch nicht der konkreten Erkennung von Personen, sondern stattdessen dem Zweck, das System aus einem Ruhemodus in einen Betriebsmodus zu überführen. Im Ruhemodus findet keinerlei Auswertung der Sensordaten der Sensoren 56A-56D, 58A-58G statt. Lediglich die Sensordaten des Beschleunigungssensors 22 werden durchgehend erfasst.

Erst wenn die Auswerteeinheit anhand dieser Sensordaten des Beschleunigungssensors 22 erkennt, dass es einmalig oder wiederholt zu Erschütterungen gekommen ist, wird dies als mögliche Bewegung von Personen erfasst und die anderen Sensoren 56A-56D, 58A-58G und ihre Auswertung werden gestartet. Insbesondere die hydraulischen Drucksensoren 56A-56D sind üblicherweise in genanntem Ruhemodus nicht im Betrieb, so dass hierdurch Energie gespart werden kann.

Die Auswerteeinheit wertet die Sensordaten der Sensoren 56A-56D, 58A-58G aus und gelangt hierdurch zu einem Überblick, ob Personen im Fahrzeug anwesend sind und wo sich diese Personen gegenwärtig befinden. Weiterhin ermittelt die Auswerteeinheit, ob die Personen im Fahrzeug ihre Position ändern oder gar das Fahrzeug verlassen. Auch das Eintreten einer Person wird ermittelt, insbesondere unter Nutzung des hydraulischen Drucksensors 56B, der durch die Nähe zur Durchgangsöffnung 18 schlagartige Druckänderungen erfassbar macht, wenn eine Person das Fahrzeug verlässt oder eintritt.

Der genannte Überblick über Personen im Wohninnenraum 12 wird von der Auswerteeinheit für verschiedene Steuerfunktionen genutzt bzw. zum Zwecke der Beeinflussung von Steuerfunktionen, die auf anderem Wege ausgelöst werden. Die nachfolgende Auflistung ist hierbei nur exemplarisch zu verstehen.

Das Fahrzeug kann beispielsweise ein Leuchtmittel 70 umfassen. Wird das Eintreten einer Person in das zuvor leere Fahrzeug erkannt und wird ggf. über einen weiteren Lichtsensor ermittelt, dass es im Fahrzeug dunkel ist, so aktiviert die Auswerteeinheit 52 das Leuchtmittel 70. Bei mehreren Leuchtmitteln 70 können diese derart aktiviert und deaktiviert werden, dass es stets in dem Bereich heller ist, in dem sich Personen befinden.

Wird erkannt, dass alle Personen das Fahrzeug verlassen haben und wird ggf. weiterhin über den CAN-Bus 20 die Information empfangen, dass das Fahrzeug verschlossen worden ist, so deaktiviert die Auswerteeinheit ein Klimagerät 72. Auch die Aktivierung einer Alarmanlage 74 kann durch die Auswerteeinheit 52 erfolgen, wenn die letzte Person das Fahrzeug 10 verlassen hat und das Fahrzeug 10 verschlossen worden ist.

Wird durch einen Benutzer ein in Fig. 1 angedeuteter Slide-Out-Kasten 14 eingefahren, so kann die Ausführung dieses Kommandos von der Auswerteeinheit 52 unterbunden werden. Die Auswerteeinheit erkennt das Kommando oder das Einfahren des Slide-Out-Kastens und prüft, ob anhand der Daten der Sensoren 58A-58G zu erwarten ist, dass das Einfahren des Slide-Out-Kastens 14 zu einer Kollision führen würde. Ist dies der Fall, so wird das Einfahren unterbrochen.

Auch die Hydraulikstützen 32A-32D können in Abhängigkeit des Überblicks gesteuert werden, den sich die Auswerteeinheit durch Auswertung der Sensoren 56A-D, 58A-G verschafft hat. So kann die Auswerteeinheit dafür ausgebildet sein, die Stützen etwas einzufahren, wenn keine Person im Wohninnenraum 12 anwesend ist. Weiterhin kann die Auswerteeinheit 52 dafür ausgebildet sein, ein Einfahren und/oder Ausfahren der Stützen 32A-32D grundsätzlich zu unterbinden, solange Personen im Fahrzeug 10 und insbesondere im Wohninnenraum anwesend sind.

## Patentansprüche

1. Fahrzeug (10) in Art eines Reisemobils oder eines Caravans mit einem Wohninnenraum (12) mit den folgenden Merkmalen:
a. das Fahrzeug (10) weist eine Personenerfassungseinrichtung (50) auf, und
b. die Personenerfassungseinrichtung (50) verfügt über mindestens einen nicht-optischen Sensor (56A-56D;58A-58G), der zur Erfassung von Personen im Fahrzeug (10) ausgebildet ist, und
c. die Personenerfassungseinrichtung (50) verfügt über eine Auswerteeinheit (52), die dafür ausgebildet ist, auf Basis von Sensordaten des mindestens einen Sensors (56A-56D;58A-58G) zu erkennen, ob sich mindestens eine Person im Fahrzeug (10) befindet und/oder wo sich mindestens eine Person im Fahrzeug (10) befindet,
**gekennzeichnet durch** das folgende weitere Merkmal:
d. der mindestens eine Sensor (56A-56D) ist zur Erfassung der auf mindestens eine ausfahrbare Stütze (32A-32D) wirkenden Kraft ausgebildet.

2. Fahrzeug (10) nach Anspruch 1 mit dem folgenden weiteren Merkmal:
a. der mindestens eine Sensor (56A-56D) ist ein Drucksensor, der zur Erfassung des Drucks von Hydraulikflüssigkeit eines Hydrauliksystems (30) des Fahrzeugs (10) ausgebildet ist,
vorzugsweise mit mindestens einem der folgenden zusätzlichen Merkmale:
b. das Hydrauliksystem (30) des Fahrzeugs (10) verfügt über eine Mehrzahl von hydraulisch ausfahrbaren Stützen (32A-32D), denen jeweils ein Hydraulikzylinder (34A-34D) zugeordnet ist, wobei der mindestens eine Drucksensor (56A-56D) zur Erfassung des Drucks innerhalb des Hydraulikzylinders (34A-34D) oder zur Erfassung eines hiermit im Zusammenhang stehenden Drucks ausgebildet ist, und/oder
c. das Hydrauliksystem (30) verfügt über eine zentrale Hydraulikeinheit (36), die mindestens eine Hydraulikpumpe (38) aufweist, wobei der Drucksensor (56A-56D) vorzugsweise im Bereich dieser zentralen Hydraulikeinheit (36) vorgesehen ist.

3. Fahrzeug (10) nach Anspruch 1 oder 2 mit den folgenden weiteren Merkmalen:
a. das Fahrzeug (10) weist eine Durchgangsöffnung (18) mit einer Eingangstür an einer Fahrzeugseite auf, und
b. mindestens eine ausfahrbare Stütze (32B) ist auf der Seite der Eingangstür vorgesehen und um nicht mehr als 1 m von der Durchgangsöffnung (18) entfernt.

4. Fahrzeug (10) nach einem der vorstehenden Ansprüche mit dem folgenden weiteren Merkmal:
a. der mindestens eine Sensor (58A-58G) ist ein Sensor zur Erfassung einer auf einen Fußboden (16) des Wohninnenraums (12) wirkenden Kraft,
vorzugsweise mit mindestens einem der folgenden zusätzlichen Merkmale:
b. der mindestens eine Sensor (58A-58G) ist ein Dehnungssensor, der an einer Unterseite des Fußbodens (16) vorgesehen ist, insbesondere ein Dehnungsmessstreifen, und/oder
c. der Fußboden (16) weist eine Sandwich-Struktur mit mindestens einer oberen Lage (16A) und mindestens einer unteren Lage (16B) auf, die zueinander beabstandet sind und zwischen denen der mindestens eine Sensor (58A-58G) angeordnet ist, und/oder
d. der mindestens eine Sensor (58A-58G) ist an einer Unterseite des Fußbodens (16) oder einer oberen Lage (16A) des Fußbodens befestigt, insbesondere mittels einer Klebeverbindung, und/oder
e. der mindestens eine Sensor (58A-58G) ist innerhalb einer Bodenplatte des Fußbodens (16) angeordnet, insbesondere innerhalb einer eingefrästen Vertiefung.

5. Fahrzeug (10) nach einem der vorstehenden Ansprüche mit dem folgenden weiteren Merkmal:
a. es ist eine Mehrzahl von Sensoren (54A-54G) zur Erfassung der auf einen Fußboden (16) des Wohninnenraums (12) wirkenden Kraft vorgesehen,
vorzugsweise mit mindestens einem der folgenden zusätzlichen Merkmale:
b. zwei benachbarte Sensoren (54A-54G) weisen einen Abstand zwischen 30 cm und 80 cm auf, und/oder
c. die Anzahl der Sensoren (54A-54G) zur Erfassung der auf einen Fußboden (16) des Wohninnenraums (12) wirkenden Kraft beträgt vorzugsweise zwischen drei und zehn.

6. Fahrzeug (10) nach einem der vorstehenden Ansprüche mit mindestens einem der folgenden weiteren Merkmale:
a. das Fahrzeug (10) weist mindestens ein Leuchtmittel (70) im Wohninnenraum (12) auf, und die Auswerteeinheit (52) ist dafür ausgebildet, das Leuchtmittel (70) in Reaktion auf die Personenerfassung zu aktivieren oder zu deaktivieren oder bzgl. seiner Leuchtleistung zu steuern, und/oder
b. das Fahrzeug (10) weist mindestens eine Heiz- und/oder Klimaanlage (72) auf, und die Auswerteeinheit (52) ist dafür ausgebildet, die Heiz- und/oder Klimaanlage (72) in Reaktion auf die Personenerfassung zu aktivieren oder zu deaktivieren oder bzgl. ihrer Heiz- oder Kühlleistung zu steuern, und/oder
c. das Fahrzeug (10) weist mindestens eine ausfahrbare Stütze (32A-32G) auf, und die Auswerteeinheit (52) ist dafür ausgebildet, die Stütze (32A-32G) in Reaktion auf die Personenerfassung einzufahren oder auszufahren bzw. das Einfahren oder Ausfahren zu unterbinden, und/oder
d. das Fahrzeug (10) weist mindestens eine Alarmanlage (74) auf, und die Auswerteeinheit (52) ist dafür ausgebildet, die Alarmanlage (74) in Reaktion auf die Personenerfassung zu aktivieren, und/oder die Alarmanlage (74) ist dafür ausgebildet, in Reaktion auf die Personenerfassung einen Alarm zu erzeugen, und/oder
e. das Fahrzeug (10) weist mindestens einen hydraulisch ausfahrbaren Slide-Out-Kasten (14) auf, und die Auswerteeinheit (52) ist dafür ausgebildet, das Ausfahren des Slide-Out-Kastens (14) in Reaktion auf die Personenerfassung zu unterbinden oder zu unterbrechen.

7. Fahrzeug (10) nach einem der vorstehenden Ansprüche mit mindestens einem der folgenden weiteren Merkmale:
a. das Fahrzeug verfügt über einen CAN-Bus (20) zur Kommunikation von Fahrzeugsteuergeräten miteinander, wobei die Auswerteeinheit (52) mit dem CAN-Bus (20) verbunden ist, und/oder
b. das Fahrzeug (10) verfügt über mindestens einen Beschleunigungssensor (22), wobei die Auswerteeinheit (52) dafür ausgebildet ist, nach Erfassen einer Beschleunigung mittels des Beschleunigungssensors (22) mindestens einen Sensor (52A-52D, 54A-54G) der Personenerfassungseinrichtung (50) zu aktivieren oder zu deaktivieren, und/oder
c. das Fahrzeug (10) verfügt über mindestens eine ausfahrbare Stütze (32A-32D), die über mindestens drei gegeneinander verschiebliche Teleskopelemente verfügt.

8. Verfahren zur Verwendung einer Personenerfassungseinrichtung (50) aus einem Fahrzeug (10) nach einem der vorstehenden Ansprüche mit den folgenden Merkmalen:
a. über den mindestens einen Sensor (56A-56D, 58A-58G) der Personenerfassungseinrichtung (50) wird erfasst, ob sich eine Person im Wohninnenraum (12) des Fahrzeugs (10) befindet und/oder wo im Wohninnenraum (12) sich eine Person befindet, und
b. in Reaktion auf die Erfassung wird mindestens einer der folgenden Schritte durchgeführt:
- Aktivieren einer Alarmanlage (74), und/oder
- Abgabe eines Alarms mittels einer Ausgabeeinheit (74A) der Alarmanlage (74), und/oder
- Verändern einer Konfiguration einer Heiz- und/oder Klimaanlage (72), und/oder
- Schalten eines Leuchtmittels (70) im Fahrzeug (10) oder am Fahrzeug (10), und/oder
- Deaktivieren elektrischer Verbraucher, insbesondere einer Klimaanlage (72), eines Leuchtmittels (70) oder eines Kochgeräts, und/oder
- Verlagerung eines Slide-Out-Kastens (14), und/oder
- Öffnen oder Schließen eines Beschattungssystems, oder
c. in Reaktion auf die Erfassung wird das Ausfahren oder Einfahren mindestens eines verlagerbaren Elements, insbesondere einer Stütze (32A-32D) oder eines Slide-Out-Kastens (14) unterbunden.

9. Verfahren nach Anspruch 8 mit mindestens einem der folgenden zusätzlichen Merkmale:
a. zur Erfassung wird mindestens ein Drucksensor (56A-56D) ausgewertet, insbesondere mindestens ein Drucksensor (56A-56D), der zur Erfassung eines Hydraulikdrucks eines Hydrauliksystems (30) des Fahrzeugs (10) ausgebildet ist, und/oder
b. zur Erfassung wird mindestens ein Sensor (58A-58G) zur Erfassung einer auf einen Fußboden (16) des Wohninnenraums (12) wirkenden Kraft verwendet, insbesondere ein am Fußboden (16) vorgesehener Dehnungssensor.

10. Verfahren nach Anspruch 8 oder 9 mit mindestens einem der folgenden weiteren Merkmale:
a. die Erfassung und/oder Auswertung durch die Personenerfassungseinrichtung (50) erfolgt in Vorbereitung des Ausfahrens oder Einfahrens eines Slide-Out-Kastens (14), und
b. das Ausfahren oder Einfahren des Slide-Out-Kastens (14) wird unterbrochen, sofern im Zuge der Erfassung und/oder Auswertung mindestens eine Person in einem kritischen Bereich ermittelt wurde.

11. Verfahren nach einem der Ansprüche 8 bis 10 mit dem folgenden weiteren Merkmal:
a. Sensoren (56A-56D, 58A- 58G) der Personenerfassungseinrichtung werden nach einem Ausfahren von Stützen (22A-22D) kalibriert.

12. Verfahren nach einem der Ansprüche 8 bis 11 mit mindestens einem der folgenden weiteren Merkmale:
a. die Aktivierung und/oder Abfrage mindestens eines Sensors (56A-56D) der Personenerfassungseinrichtung (50) erfolgt in Reaktion auf die Erfassung mindestens einer Erschütterung mittels eines Beschleunigungssensors (22) und/oder
b. die Abfragefrequenz mindestens eines Sensors (56A-56D) der Personenerfassungseinrichtung (50) wird in Reaktion auf die Erfassung mindestens einer Erschütterung mittels eines Beschleunigungssensors (22) verändert, insbesondere erhöht.

13. Verfahren nach einem der Ansprüche 8 bis 12 mit dem folgenden weiteren Merkmal:
a. in Reaktion auf die Erfassung einer Person in einem ersten Bereich des Fahrzeugs bzw. die Abwesenheit einer Person in einem zweite Bereich des Fahrzeugs wird die Heiz- und/oder Klimaanlage (72) derart eingestellt, dass eine Heiz- und/oder Kühlfunktion im Bereich aktiviert und/oder im zweiten Bereich deaktiviert wird.

## Claims

1. Vehicle (10) in the form of a motor home or caravan with a living space (12), having the following features:
a. the vehicle (10) has a person detection device (50), and
b. the person detection device (50) has at least one non-optical sensor (56A-56D; 58A-58G), which is designed for detecting persons in the vehicle (10), and
c. the person detection device (50) has an evaluation unit (52), which is designed to identify on the basis of sensor data from the at least one sensor (56A-56D; 58A-58G) whether at least one person is in the vehicle (10) and/or where at least one person is in the vehicle (10),
**characterized by** the following further feature:
d. the at least one sensor (56A-56D) is designed to detect the force acting on at least one extendable support (32A-32D).

2. Vehicle (10) according to Claim 1, having the following further feature:
a. the at least one sensor (56A-56D) is a pressure sensor, which is designed to detect the pressure of hydraulic fluid of a hydraulic system (30) of the vehicle (10),
preferably having at least one of the following additional features:
b. the hydraulic system (30) of the vehicle (10) has a plurality of hydraulically extendable supports (32A-32D), each of which is assigned a hydraulic cylinder (34A-34D), wherein the at least one pressure sensor (56A-56D) is designed for detecting the pressure within the hydraulic cylinder (34A-34D) or for detecting a pressure associated therewith, and/or
c. the hydraulic system (30) has a central hydraulic unit (36), which has at least one hydraulic pump (38), wherein the pressure sensor (56A-56D) is preferably provided in the region of this central hydraulic unit (36).

3. Vehicle (10) according to Claim 1 or 2, having the following further features:
a. the vehicle (10) has a passage opening (18) with an entrance door on one side of the vehicle, and
b. at least one extendable support (32B) is provided on the same side as the entrance door and is not more than 1 m away from the passage opening (18).

4. Vehicle (10) according to any of the preceding claims, having the following further feature:
a. the at least one sensor (58A-58G) is a sensor for detecting a force acting on a floor (16) of the living space (12),
preferably having at least one of the following additional features:
b. the at least one sensor (58A-58G) is a strain sensor, which is provided on a bottom side of the floor (16), in particular a strain gauge, and/or
c. the floor (16) has a sandwich structure with at least one upper layer (16A) and at least one lower layer (16B) which are at a distance from each other and between which the at least one sensor (58A-58G) is arranged, and/or
d. the at least one sensor (58A-58G) is attached to a bottom side of the floor (16) or an upper layer (16A) of the floor, in particular by means of an adhesive bond, and/or
e. the at least one sensor (58A-58G) is arranged within a base plate of the floor (16), in particular within a milled recess.

5. Vehicle (10) according to any of the preceding claims, having the following further feature:
a. a plurality of sensors (54A-54G) is provided for detecting the force acting on a floor (16) of the living space (12),
preferably having at least one of the following additional features:
b. two adjacent sensors (54A-54G) have a spacing of between 30 cm and 80 cm, and/or
c. the number of sensors (54A-54G) for detecting the force acting on a floor (16) of the living space (12) is preferably between three and ten.

6. Vehicle (10) according to any of the preceding claims, having at least one of the following further features:
a. the vehicle (10) has at least one lighting means (70) in the living space of the home (12), and the evaluation unit (52) is designed to activate or deactivate the lighting means (70) or to control its light output in response to a person being detected, and/or
b. the vehicle (10) has at least one heating and/or air-conditioning system (72), and the evaluation unit (52) is designed to activate or deactivate the heating and/or air-conditioning system (72) or to control its heating or cooling performance in response to a person being detected, and/or
c. the vehicle (10) has at least one extendable support (32A-32G), and the evaluation unit (52) is designed to retract or extend the support (32A-32G) or to prevent the retraction or extension in response to a person being detected, and/or
d. the vehicle (10) has at least one alarm system (74), and the evaluation unit (52) is designed to activate the alarm system (74) in response to a person being detected, and/or the alarm system (74) is designed to generate an alarm in response to a person being detected, and/or
e. the vehicle (10) has at least one hydraulically extendable slide-out box (14), and the evaluation unit (52) is designed to prevent or interrupt the extension of the slide-out box (14) in response to a person being detected.

7. Vehicle (10) according to any of the preceding claims, having at least one of the following further features:
a. the vehicle has a CAN bus (20) for communication between vehicle control units, wherein the evaluation unit (52) is connected to the CAN bus (20), and/or
b. the vehicle (10) has at least one acceleration sensor (22), wherein the evaluation unit (52) is designed to activate or deactivate at least one sensor (52A-52D, 54A-54G) of the person detection device (50) after acceleration has been detected by means of the acceleration sensor (22), and/or
c. the vehicle (10) has at least one extendable support (32A-32D), which has at least three telescopic elements which can be moved in relation to each other.

8. Method for using a person detection device (50) from a vehicle (10) according to any of the preceding claims, having the following features:
a. the at least one sensor (56A-56D, 58A-58G) of the person detection device (50) is used to detect whether a person is in the living space (12) of the vehicle (10) and/or where a person is in the living space (12), and
b. at least one of the following steps is carried out in response to the detection:
- activating an alarm system (74), and/or
- outputting an alarm by means of an output unit (74A) of the alarm system (74), and/or
- changing a configuration of a heating and/or air-conditioning system (72), and/or
- switching a lighting means (70) in the vehicle (10) or on the vehicle (10), and/or
- deactivating electrical consumers, in particular an air-conditioning system (72), a lighting means (70) or a cooking appliance, and/or
- moving a slide-out box (14), and/or
- opening or closing a shading system, or
c. the extension or retraction of at least one movable element, in particular a support (32A-32D) or a slide-out box (14), is prevented in response to the detection.

9. Method according to Claim 8, having at least one of the following additional features:
a. for detection, at least one pressure sensor (56A-56D) is evaluated, in particular at least one pressure sensor (56A-56D) which is designed for detecting a hydraulic pressure of a hydraulic system (30) of the vehicle (10), and/or
b. for detection, at least one sensor (58A-58G) is used for detecting a force acting on a floor (16) of the living space (12), in particular a strain sensor provided on the floor (16).

10. Method according to Claim 8 or 9 having at least one of the following further features:
a. the detection and/or evaluation by the person detection device (50) is performed in preparation for extending or retracting a slide-out box (14), and
b. the extension or retraction of the slide-out box (14) is interrupted if at least one person has been identified in a critical region during the detection and/or evaluation.

11. Method according to any of Claims 8 to 10, having the following further feature:
a. sensors (56A-56D, 58A-58G) of the person detection device are calibrated after supports (22A-22D) are extended.

12. Method according to any of Claims 8 to 11, having at least one of the following further features:
a. at least one sensor (56A-56D) of the person detection device (50) is activated and/or checked in response to the detection of at least one vibration by means of an acceleration sensor (22) and/or
b. the checking frequency of at least one sensor (56A-56D) of the person detection device (50) is changed, in particular increased, in response to the detection of at least one vibration by means of an acceleration sensor (22).

13. Method according to any of Claims 8 to 12, having the following further feature:
a. in response to the detection of a person in a first region of the vehicle or the absence of a person in a second region of the vehicle, the heating and/or air-conditioning system (72) is adjusted in such a way that a heating and/or cooling function is activated in the region and/or deactivated in the second region.

## Revendications

1. Véhicule (10) du type camping-car ou caravane, comprenant un espace intérieur habitable (12) et présentant les caractéristiques suivantes :
a. le véhicule (10) comporte un dispositif (50) de détection de personnes, et
b. le dispositif (50) de détection de personnes dispose d'au moins un capteur non-optique (56A-56D ; 58A-58G) qui est conçu pour détecter la présence de personnes dans le véhicule (10), et
c. le dispositif (50) de détection de personnes comprend une unité d'évaluation (52) qui est conçue pour détecter, sur la base de données dudit au moins un capteur (56A-56D ; 58A-58G), si au moins une personne se trouve dans le véhicule (10) et/ou à quel endroit se trouve au moins une personne dans le véhicule (10),
**caractérisé par** la caractéristique supplémentaire suivante :
d. ledit au moins un capteur (56A-56D) est conçu pour détecter la force agissant sur au moins un support extensible (32A-32D).

2. Véhicule (10) selon la revendication 1, présentant la caractéristique supplémentaire suivante :
a. ledit au moins un capteur (56A-56D) est un capteur de pression conçu pour détecter la pression du fluide hydraulique d'un système hydraulique (30) du véhicule (10),
comprenant de préférence au moins une des caractéristiques supplémentaires suivantes :
b. le système hydraulique (30) du véhicule (10) comprend une pluralité de supports (32A-32D) à extension hydraulique, chacun étant associé à un vérin hydraulique (34A-34D), ledit au moins un capteur de pression (56A-56D) étant conçu pour détecter la pression à l'intérieur du vérin hydraulique (34A-34D) ou pour détecter une pression qui est liée à celui-ci, et/ou
c. le système hydraulique (30) comprend une unité hydraulique centrale (36) qui comprend au moins une pompe hydraulique (38), le capteur de pression (56A-56D) étant de préférence prévu dans la zone de cette unité hydraulique centrale (36).

3. Véhicule (10) selon la revendication 1 ou la revendication 2, comprenant les caractéristiques supplémentaires suivantes :
a. le véhicule (10) présente une ouverture de passage (18) avec une porte d'entrée sur un côté du véhicule, et
b. au moins un support extensible (32B) est prévu sur le côté de la porte d'entrée et à une distance maximale de 1 m de l'ouverture de passage (18).

4. Véhicule (10) selon l'une des revendications précédentes, comprenant la caractéristique supplémentaire suivante :
a. ledit au moins un capteur (58A-58G) est un capteur destiné à détecter une force agissant sur un plancher (16) de l'espace intérieur habitable (12),
comprenant de préférence au moins une des caractéristiques supplémentaires suivantes :
b. ledit au moins un capteur (58A-58G) est un capteur de déformation prévu sur une face inférieure du plancher (16), en particulier une jauge de déformation, et/ou
c. le plancher (16) présente une structure en sandwich ayant au moins une couche supérieure (16A) et au moins une couche inférieure (16B) qui sont espacées l'une de l'autre et entre lesquelles est agencé ledit au moins un capteur (58A-58G), et/ou
d. ledit au moins un capteur (58A-58G) est fixé à une face inférieure du plancher (16) ou à une couche supérieure (16A) du plancher, en particulier au moyen d'une liaison adhésive, et/ou
e. ledit au moins un capteur (58A-58G) est agencé à l'intérieur d'une plaque de fond du plancher (16), en particulier à l'intérieur d'un renfoncement fraisé.

5. Véhicule (10) selon l'une des revendications précédentes, comprenant la caractéristique supplémentaire suivante :
a. une pluralité de capteurs (54A-54G) est prévue pour détecter la force agissant sur un plancher (16) de l'espace intérieur habitable (12),
comprenant de préférence au moins une des caractéristiques supplémentaires suivantes :
b. deux capteurs voisins (54A-54G) sont espacés de 30 cm à 80 cm, et/ou
c. le nombre de capteurs (54A-54G) destinés à détecter la force agissant sur un plancher (16) de l'espace intérieur habitable (12) est de préférence compris entre trois et dix.

6. Véhicule (10) selon l'une des revendications précédentes, comprenant au moins une des caractéristiques supplémentaires suivantes :
a. le véhicule (10) comprend au moins une source de lumière (70) dans l'espace intérieur habitable (12), et l'unité d'évaluation (52) est conçue pour activer ou désactiver le moyen d'éclairage (70) en réaction à la détection de personnes ou pour le commander quant à sa puissance d'éclairage, et/ou
b. le véhicule (10) comprend au moins un système de chauffage et/ou de climatisation (72), et l'unité d'évaluation (52) est conçue pour activer ou désactiver le système de chauffage et/ou de climatisation (72) en réponse à la détection de personnes ou pour le commander quant à sa puissance de chauffage ou de refroidissement, et/ou
c. le véhicule (10) comprend au moins un support extensible (32A-32G) et l'unité d'évaluation (52) est conçue pour rentrer ou déployer le support (32A-32G) en réponse à la détection de personnes ou pour empêcher la rentrée ou le déploiement, et/ou
d. le véhicule (10) comprend au moins un système d'alarme (74), et l'unité d'évaluation (52) est conçue pour activer le système d'alarme (74) en réponse à la détection de personnes, et/ou le système d'alarme (74) est conçu pour générer une alarme en réponse à la détection de personnes, et/ou
e. le véhicule (10) comprend au moins un caisson coulissant (14) à extension hydraulique, et l'unité d'évaluation (52) est conçue pour empêcher ou interrompre l'extension du caisson coulissant (14) en réaction à la détection de personnes.

7. Véhicule (10) selon l'une des revendications précédentes, comprenant au moins une des caractéristiques supplémentaires suivantes :
a. le véhicule comprend un bus CAN (20) pour la communication entre les appareils de commande du véhicule, l'unité d'évaluation (52) étant reliée au bus CAN (20), et/ou
b. le véhicule (10) dispose d'au moins un capteur d'accélération (22), l'unité d'évaluation (52) étant conçue pour, après avoir détecté une accélération au moyen du capteur d'accélération (22), activer ou désactiver au moins un capteur (52A-52D, 54A-54G) du dispositif (50) de détection de personnes, et/ou
c. le véhicule (10) dispose d'au moins un support extensible (32A-32D) qui comporte au moins trois éléments télescopiques aptes à coulisser les uns par rapport aux autres.

8. Procédé d'utilisation d'un dispositif (50) de détection de personnes d'un véhicule (10) selon l'une des revendications précédentes, comprenant les caractéristiques suivantes :
a. ledit au moins un capteur (56A-56D, 58A-58G) du dispositif (50) de détection de personnes détecte si une personne se trouve dans l'espace intérieur habitable (12) du véhicule (10) et/ou à quel endroit se trouve une personne dans l'espace intérieur habitable (12), et
b. en réponse à la détection, au moins une des étapes suivantes est mise en œuvre :
- activation d'un système d'alarme (74), et/ou
- émission d'une alarme au moyen d'une unité de sortie (74A) du système d'alarme (74), et/ou
- modification d'une configuration d'un système de chauffage et/ou de climatisation (72), et/ou
- allumage d'une source de lumière (70) dans le véhicule (10) ou sur le véhicule (10), et/ou
- désactivation de consommateurs électriques, en particulier d'un système de climatisation (72), d'une source de lumière (70) ou d'un appareil de cuisson, et/ou
- déplacement d'un caisson coulissant (14), et/ou
- ouverture ou fermeture d'un système d'ombrage, ou
c. en réaction à la détection, la sortie ou la rentrée d'au moins un élément déplaçable, en particulier d'un support (32A-32D) ou d'un caisson coulissant (14), est empêchée.

9. Procédé selon la revendication 8, comprenant au moins une des caractéristiques supplémentaires suivantes :
a. pour la détection, au moins un capteur de pression (56A-56D) est évalué, en particulier au moins un capteur de pression (56A-56D) qui est conçu pour détecter une pression hydraulique d'un système hydraulique (30) du véhicule (10), et/ou
b. pour la détection, au moins un capteur (58A-58G) est utilisé pour détecter une force agissant sur un plancher (16) de l'espace intérieur habitable (12), en particulier un capteur de déformation prévu sur le plancher (16).

10. Procédé selon la revendication 8 ou la revendication 9, comprenant au moins une des caractéristiques supplémentaires suivantes :
a. la détection et/ou l'évaluation par le dispositif (50) de détection de personnes s'effectue en préparation de la sortie ou de la rentrée d'un caisson coulissant (14), et
b. la sortie ou la rentrée du caisson coulissant (14) est interrompue si, au cours de la détection et/ou de l'évaluation, au moins une personne a été détectée dans une zone critique.

11. Procédé selon l'une des revendications 8 à 10, comprenant la caractéristique supplémentaire suivante :
a. les capteurs (56A-56D, 58A-58G) du dispositif de détection de personnes sont étalonnés après la sortie des supports (22A-22D).

12. Procédé selon l'une des revendications 8 à 11, comprenant au moins une des caractéristiques supplémentaires suivantes :
a. l'activation et/ou l'interrogation d'au moins un capteur (56A-56D) du dispositif (50) de détection de personnes s'effectue en réaction à la détection d'au moins une vibration au moyen d'un capteur d'accélération (22), et/ou
b. la fréquence d'interrogation d'au moins un capteur (56A-56D) du dispositif (50) de détection de personnes est modifiée, en particulier augmentée, en réaction à la détection d'au moins une vibration au moyen d'un capteur d'accélération (22).

13. Procédé selon l'une des revendications 8 à 12, comprenant la caractéristique supplémentaire suivante :
a. en réponse à la détection d'une personne dans une première zone du véhicule ou à l'absence d'une personne dans une deuxième zone du véhicule, le système de chauffage et/ou de climatisation (72) est réglé de telle sorte qu'une fonction de chauffage et/ou de refroidissement est activée dans la zone et/ou désactivée dans la deuxième zone.
